# FASCICULE DE BREVET EUROPEEN

(11) **EP 0 893 333 B1**
(45) Date de publication et mention de la délivrance du brevet: **19.11.2003**
(21) Numéro de dépôt: 98401842.4
(22) Date de dépôt: 21.07.1998
(51) Int. Cl.: B62D 55/21

(54) **Dispositif de connexion de maillons de chenilles**
Verbindungsvorrichtung für Glied einer Gleiskette
Connection device for track chain link

(30) Priorité: 22.07.1997 FR 9709277
(43) Date de publication de la demande: 27.01.1999
(73) Titulaire: GIAT INDUSTRIES, 78000 Versailles (FR)
(72) Inventeur: Chapuis, François, 42390 Villars (FR)
(74) Mandataire: Célanie, Christian

(56) Documents cités:
- EP-A- 0 308 672
- US-A- 3 467 446

## Description

La présente invention concerne un dispositif de connexion de maillons de chenille, et plus particulièrement la pièce de liaison des axes de deux maillons consécutifs de la chenille.

Les véhicules chenillés civiles ou militaires sont équipés de deux chenilles constituées par des maillons reliés entre-eux par des liaisons à charnières ou connecteurs, et on a déjà proposé de nombreux moyens permettant de relier les axes des maillons adjacents. Ces moyens sont généralement constitués par un système vis-écrou.

On a adopté, notamment en France, un connecteur connu sous la désignation connecteur à pincement broché. Suivant ce type de connexion, les axes des maillons sont munis chacun d'un méplat sur lequel on vient pincer le corps du connecteur à l'aide d'une vis de fixation. Les inconvénients de ce type de système résident tout d'abord dans les usinages relativement précis qu'il faut pratiquer, et ensuite dans le risque de la perte du connecteur qui peut intervenir par suite d'un desserrage de la vis.

Par contre, on a adopté, notamment aux Etats-Unis d'Amérique, un connecteur connu sous la désignation de connecteur à coin. Avec ce type de connecteur, les axes des maillons sont bloqués à l'aide d'un coin tiré par une vis de fixation, mais le corps du connecteur comporte un brin libre. Sous l'effet de la torsion répétée qui est appliquée sur les axes, il y a un matage des méplats et du coin, puis un étirement du corps du connecteur. L'ébranlement continu de l'ensemble provoque le déblocage des vis et, par suite, une détérioration rapide du connecteur si on ne s'astreint pas à un contrôle régulier du couple de serrage des vis.

On peut se reporter au document FR-A-2 347 253 qui décrit entre autres ces deux dispositifs de connecteurs. Ce document décrit également un dispositif de connexion dans lequel l'écartement et le blocage des axes sont assurés par un disque, une vis assurant le maintien en place du disque. Cependant, dans cette solution, le desserrage de la vis entraîne la perte du disque et, par suite, du connecteur.

Le brevet EP-0308672 décrit un dispositif selon le préambule de la revendication 1, comprenant un élément élastique en appui contre les axes adjacents de deux maillons consécutifs, réalisé sous la forme d'une plaque conformée présentant deux languettes élastiques distinctes s'appliquant chacune sur un des deux axes. Chaque languette coopère avec une rainure pratiquée sur l'extrémité de l'axe sur lequel elle appuie.

Le but de l'invention est de concevoir un dispositif de connexion permettant d'éviter la perte du connecteur même en cas de desserrage accidentel de la vis.

A cet effet, l'invention propose un dispositif comprenant les caractéristiques de la revendication 1.

Les moyens de retenue peuvent être réalisés suivant plusieurs formes de réalisation différentes.

A titre d'exemple, les moyens de retenue peuvent être intégrés dans les branches de l'élément élastique et être constitués par des ergots situés vers les extrémités libres des branches, alors que les moyens de réception sont constitués par des encoches ménagées dans les axes.

En variante, les moyens de retenue peuvent être constitués par des pions ou un insert, alors que les moyens de réception sont constitués par des encoches ménagées dans les branches de l'élément élastique et dans les axes.

Un avantage important de l'invention réside dans l'absence de formes usinées nécessitant un brochage onéreux, ces usinages devant en outre être relativement précis.

Un autre avantage de l'invention réside dans l'absence de dimensionnement précis tout en assurant l'orientation des axes par rapport au connecteur.

D'autres avantages, caractéristiques et détails de l'invention ressortiront du complément de description qui va suivre de modes de réalisation donnés à titre d'exemple en relation avec des dessins sur lesquels :
- la figure 1 représente une vue d'ensemble de deux maillons adjacents d'une chenille réunis par un dispositif de connexion selon l'invention,
- les figures 2A et 2B sont des vues en coupe d'un élément élastique du dispositif de connexion,
- la figure 3 est une vue en coupe axiale de l'extrémité des axes des maillons pour illustrer l'insertion de l'élément élastique,
- la figure 4 est une vue en coupe transversale pratiquée au niveau de la vis,
- la figure 5 est une vue en coupe axiale de l'extrémité des axes des maillons pour illustrer une variante de réalisation de l'élément élastique, et
- les figures 6 et 7 sont des vues en coupe axiale de l'extrémité des axes des maillons pour illustrer deux autres variantes de réalisation de l'élément élastique.

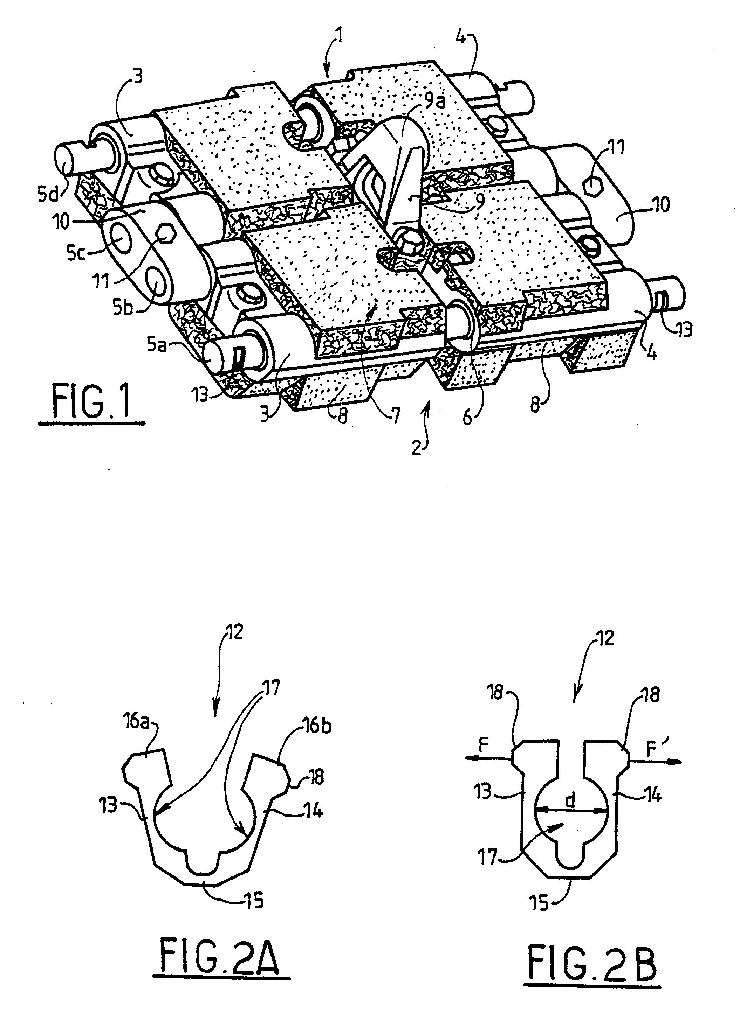

On a représenté sur la figure 1 une vue en perspective de deux maillons adjacents 1 et 2 d'une chenille d'un véhicule. Ces maillons 1 et 2 sont tout à fait classiques et comportent de façon connue deux corps de patin 3 et 4 forgés ou moulés et percés chacun de deux forages traversant à l'intérieur desquels sont emmanchés des axes 5a, 5b, 5c et 5d par l'intermédiaire d'adhérite 6. Chacun patin 3 et 4 comprend une surface de contact 7, éventuellement caoutchoutée, avec les barbotins du véhicule et une surface de roulement 8 le plus souvent caoutchoutée. Au niveau médian, les deux axes contigus 5b et 5c des maillons 1 et 2 sont reliés par un connecteur central 9 prolongé par un ergot de guidage 9a sur lequel vient engrener la couronne d'entraînement du véhicule.

Selon l'invention, les deux axes 5b et 5c des maillons 1 et 2 sont reliés par un connecteur 10 à vis 11, qui est positionné au niveau des extrémités libres des axes 5b et 5c, et à l'intérieur duquel est disposé un élément élastique 12 entre ces deux axes.

L'élément élastique 12 illustré sur les figures 2A et 2B se présente sous la forme d'un Cé dont les deux branches 13 et 14 sont réunies par une base 15 à une extrémité. Cette base 15 assure une liaison élastique entre les deux branches 13 et 14. La figure 2A représente la position éloignée des deux extrémités libres 16a et 16b. Les branches 13 et 14 et la base 13 délimitent un alésage 17 sensiblement cylindrique pour permettre le passage de la vis 11. Sur chaque branche 13 ou 14 est prévu un moyen de retenue 18 constitué par un ergot se présentant sous la forme d'une excroissance à chaque extrémité libre 16a et 16b. La figure 2B montre l'élément élastique 12 avec ses deux branches 13 et 14 rapprochées l'une de l'autre lorsque l'élément élastique est intégré dans le connecteur 10. Au niveau des ergots 18, des forces F et F' s'éxerçent et tendent à écarter les branches 13 et 14 l'une de l'autre.

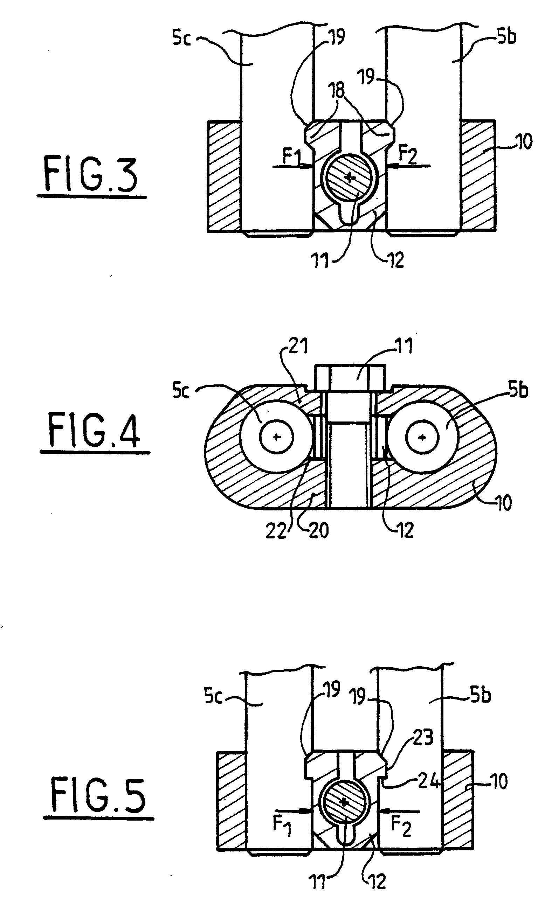

Sur la figure 3, on a illustré la position de montage du connecteur 10 sur l'extrémité des axes 5c et 5d. Chaque axe comprend un moyen de réception 19 constitué par une encoche dans laquelle vient se loger l'un des ergots 18 de l'élément élastique 12. Chaque ergot 18 est en appui constant dans l'encoche 19 correspondante. Sur la figure 4, on voit que chaque connecteur 10 comprend un brin inférieur 20 et un brin supérieur 21 délimitant un logement 22 dans lequel l'élément élastique 12 est inséré. La vis 11 est vissée dans le brin inférieur 20 en passant entre les deux branches 13 et 14. Sur la figure 3, on remarque que les branches 13 et 14 délimitent un logement de passage de la vis 11 qui est conformé à son profil extérieur, par exemple circulaire.

Le montage du connecteur 10 s'effectue de la façon suivante. On introduit tout d'abord le connecteur 10 sur les axes 5b et 5c, et on pince l'élément élastique 12 que l'on introduit dans le logement 22. Les ergots 18 se positionnent par élasticité dans les encoches 19 des axes en s'écartant l'un de l'autre. On monte la vis 11 que l'on sert au couple souhaité pour assurer un ensemble monolithique et sans jeu. Ainsi, le connecteur 10 ne peut pas se dégager des axes 5b et 5c, ce qui le rend indétachable quelque soit le couple de serrage appliqué sur la vis 11.

Sur la figure 5, on a représenté une variante de réalisation de l'encoche 19 et par conséquent de l'ergot 18. Dans cet exemple, chaque encoche 19 comporte deux faces droites 23 et 24, ce qui accroît l'accrochage de l'élément élastique 22 sur les axes 5b et 5c.

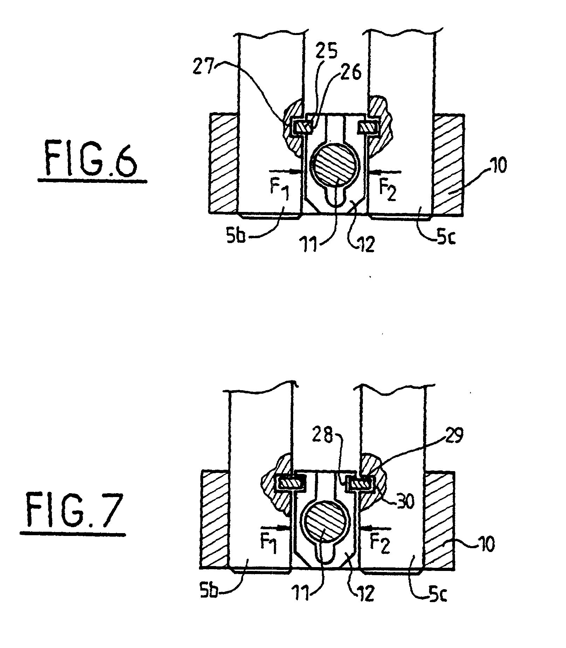

On a représenté sur la figure 6 un exemple de réalisation des moyens de retenue de l'élément élastique 12, qui sont constitués par un pion 25 engagé dans un logement 26 pratiqué dans chaque branche 13 et 14. Chaque pion 25 coopère avec des moyens de réception constitués par des encoches 27 pratiquées dans les axes 5b et 5c.

Une autre variante de réalisation est représentée sur la figure 7 avec l'élément élastique 12 et les axes 5b et 5c qui sont munis d'encoches respectives 28 et 29 coopérant avec un insert 30.

Sur les figures 3 et 5 à 7, on représenté les efforts F1 et F2 de pression exercés par l'alésage 17 sur le corps de la vis 11. A cette fin, on s'arrange pour que le diamètre d (fig. 2B) de l'alésage 17 soit inférieur au diamètre du corps de la vis 11. L'élément 12 vient alors exercer sur la vis une action supplémentaire de frein, ce qui diminue les risques de dessérrage.

## Revendications

1. Dispositif de connexion pour chenille de véhicule destiné à relier deux à deux les extrémités des axes (5b,5c) des maillons de chenille, constitué d'un connecteur (10) dont les deux brins (20,21) sont reliés par une vis (11) pour bloquer lesdits axes (5b,5c), dispositif comprenant un élément élastique (12) inséré entre les deux axes (5b,5c) et exerçant un appui constant sur ces derniers pour appliquer des moyens de retenue (18;25;30) contre des moyens de réception complémentaires (19;26,27;28,29) ménagés sur les axes (5b,5c), cet élément élastique (12) présentant deux branches (13,14) réunies à une extrémité par une base (15) assurant leur liaison élastique en éloignement l'une de l'autre, les moyens de retenue (18;25;30) étant positionnés au niveau des branches (13,14), la vis (11) étant interposée entre les deux branches (13,14) de l'élément élastique, dispositif **caractérisé en ce que** les branches (13,14) délimitent un logement de passage (22) épousant la forme de la vis (11).

2. Dispositif de connexion selon la revendication 1, **caractérisé en ce que** les moyens de retenue (18) sont intégrés dans les branches (13,14) de l'élément élastique (12).

3. Dispositif de connexion selon la revendication 1, **caractérisé en ce que** les moyens de retenue (18) sont positionnés au niveau des extrémités libres des branches (13,14) de l'élément élastique (12).

4. Dispositif de connexion selon la revendication 1, **caractérisé en ce que** les moyens de retenue sont constitués par des ergots (18) et les moyens de réception par des encoches (19).

5. Dispositif de connexion selon la revendication 1, **caractérisé en ce que** les moyens de retenue sont constitués par un insert (30) logé dans une encoche (28) pratiquée dans chaque branche (13,14) de l'élément élastique (12).

6. Dispositif de connexion selon la revendication 1, **caractérisé en ce que** les moyens de retenue sont constitués par des pions (25) et les moyens de réception par un logement (26) ménagé dans chaque branche (13,14) de l'élément élastique (12) et par des encoches (27) ménagées dans les axes (5b,5c).

## Patentansprüche

1. Verbindungsvorrichtung für Gleiskette eines Fahrzeuges, die dafür vorgesehen ist, paarweise die Ende der Achsen (5b, 5c) der Gliedern des Gleisketten zu verbinden, mit ein Verbindungsstück (10), deren zweier Stücke (20, 21) mit einer Schraube (11) verbunden sind, um die genannten Achsen (5b, 5c) zu blockieren, wobei die Vorrichtung ein elastisches Element (12) umfasst, das zwischen den beiden Achsen (5b, 5c) angeordnet ist und ständig fest in der Letzteren liegt an, um Haltemittel (18; 25; 30) gegen weiteren in den Achsen (5b, 5c) angebrachtenen Aufnahmmittel (19; 26,27; 28,29) anzuordnen, wobei dieses elastische Element (12) zwei Arme (13, 14) aufweist, die durch einen Fuß (15) an einem Ende verbunden sind, welcher Fuß ihre elastische Verbindung voneinander entfernt gewährleistet, wobei die Haltemittel (18; 25; 30) auf Höhe der Armen (13, 14) angeordnet sind, wobei die Schraube (11) zwischen den beiden Armen (13, 14) des elastischen Elementes (12) angeordnet ist, Vorrichtung, **dadurch gekennzeichnet, dass** die Armen (13, 14) eine Aufnahme (22) für den Durchgang der Schraube (11) begrenzen.

2. Verbindungsvorrichtung nach Anspruch 1, **dadurch gekennzeichnet, dass** die Haltemittel (18) in den Armen (13, 14) des elastischen Elementes (12) integriert sind.

3. Verbindungsvorrichtung nach Anspruch 1, **dadurch gekennzeichnet, dass** die Haltemittel (18) auf Höhe der freien Enden der Armen (13, 14) des elastischen Elementes (12) angeordnet sind.

4. Verbindungsvorrichtung nach Anspruch 1, **dadurch gekennzeichnet, dass** die Haltemittel durch Vorsprünge (18) und die Aufnahmemittel durch Kerben (19) gebildet sind.

5. Verbindungsvorrichtung nach Anspruch 1, **dadurch gekennzeichnet, dass** die Haltemittel durch einen Einsatz (30) gebildet sind, der sich in einer Kerbe (30) einfügt, die in jedem Arm (13, 14) des elastischen Elementes (12) angebracht ist.

6. Verbindungsvorrichtung nach Anspruch 1, **dadurch gekennzeichnet, dass** die Haltemittel durch Klötzchen (25) und die Aufnahmemittel durch eine in jedem Arm (13, 14) des elastischen Elementes (12) eingearbeitete Aufnahme (26) und durch Kerben (27) gebildet sind, die in den Achsen (5b, 5c) angebracht sind.

## Claims

1. A connection device for a vehicle track intended to connect in twos the ends of the pins (5b, 5c) of track links, constituted by a connector (10) whose two ends (20, 21) are connected by a screw (11) to block said pins (5b, 5c), device also comprising a flexible element (12) inserted between the two pins (5b, 5c) and exerting a constant pressure on these pins to apply retention means (18, 25, 30) against matching reception means (19, 26, 27, 28, 29) arranged in the pins (5b, 5c), this flexible element (12) having two branches (13, 14) joined at one end by a base (15) ensuring their flexible linkage whilst spread apart from one another, the retention means (18, 25, 30) being positioned at the branches (13, 14), the screw (11) being placed between the two branches (13, 14) of the flexible element, such device being **characterized in that** the branches (13, 14) delimit a through housing (22) matching the shape of the screw (11).

2. A connection device according to Claim 1, **characterized in that** the retention means (18) are integrated into the branches (13, 14) of the flexible element (12).

3. A connection device according to Claim 1, **characterized in that** the retention means (18) are positioned at the free ends of the branches (13, 14) of the flexible element (12).

4. A connection device according to Claim 1, **characterized in that** the retention means are constituted by stubs (18) and the reception means by notches (19).

5. A connection device according to Claim 1, **characterized in that** the retention means are constituted by an insert (30) housed in a notch (28) made in each branch (13, 14) of the flexible element (12).

6. A connection device according to Claim 1, **characterized in that** the retention means are constituted by pins (25) and the reception means by a housing (26) arranged in each branch (13, 14) of the flexible element (12) and by notches (27) arranged in the pins (5b, 5c).
